# EUROPEAN PATENT APPLICATION

(11) **EP 1 484 094 A2**
(43) Date of publication of application: **08.12.2004**
(21) Application number: 04013018.9
(22) Date of filing: 02.06.2004
(51) Int. Cl.: A63F 13/12

(54) **Apparatus, method and program for managing network of game machines**

(30) Priority: 06.06.2003 JP 2003162245
(71) Applicant: Sammy Corporation, Tokyo 170-8436 (JP)
(72) Inventor: Yagi, Masaki Sammy Corporation, Toshima-ku Tokyo 170-8436 (JP); Murase, Hiroaki Sammy Corporation, Toshima-ku Tokyo 170-8436 (JP)
(74) Representative: Sajda, Wolf E., Dipl.-Phys.

(57) **Abstract**

A management database stores data about a game session expressed in terms of reference time, and data about time differences between the reference time and the standard times of each country or region. The indication of each of game-playing time-periods collected from game machines which are located at random in various countries or regions, is converted from the standard time to the reference time. The game-playing time-period indicated in the reference time is compared with the game session data written on the basis of the reference time in order to determine whether or not the game-playing time-period is within the game session. Then based on the data regarding the play results within the game session, the game ranking is determined.

## Description

### BACKGROUND OF THE INVENTION

### FIELD OF THE INVENTION

The invention relates to a management apparatus and a management method of managing a game played by a plurality of game machines connected to a network and a program for executing the management of a game played by a plurality of game machines connected to the network.

The present application claims priority from Japanese Application No.2003-162245, the disclosure of which is incorporated herein by reference.

### DESCRIPTION OF THE RELATED ART

In recent years a wide variety of forms of game machines have been developed, and as well as personal computers storing game software, home game machines and various game machines installed in a game arcade or the like, for example, have been developed to have a communication function connectable to a computer network such as LAN, the Internet or the like.

A wide variety of forms of games using the communication function installed on such a game machine have also been developed.

For example, video games using the communication function of the game machine include a form of games in which a plurality of players compete with one another over a network for the game-play results such as points or the like scored on their game machines.

A game of the form using a network does not make players compete for scores in a game on a single game machine as done conventionally. In such a game, a plurality of players operate their respective game machines and participate in a game of competition for victory/defeatorrankingwhichisdeterminedbyusingcommunication over the network to calculate the game-play results such as points scored on the individual game machines. For example, a game arcade administers the game by a method of calculating points scored on the individual game machines within a set game session, and then announcing the high scoring players or awarding prizes.

If a game of the above form is held on a single site such as a game arcade or held over the Internet or the like within a single country, there is no problem produced when the time-period of the game session is set up. However, if any game machine located in another country participates in the game, the starting time and the ending time vary according to the different time-zones among the countries in which the game machines are located. This produces the problem of making it impossible for the game manager to uniformly calculate score data, transmitted from the game machines located in various countries, on a game basis.

To solve the problem one of the possible methods is to add the status of a game name or the like, the name of a game competition, or the like to the score data. However, this method significantly increases the amount of data transmitted and thus produces another problem of difficulties in communication between remote sites.

Further, if a player participates in a game from a country having domestic time differences such as U.S.A., the player can use the time difference to substantially extend the time-period of the game session. This gives rise to the problem of the impossibility of maintaining a fair game.

### SUMMARY OF THE INVENTION

The present invention has been made to solve the problems associated with the administration of a game using a network as described above.

It is therefore a first object of the present invention to provide a network management apparatus for game machines which is capable of uniformly calculating score data transmitted from the game machines participating from a home country and also from other countries when a game using a network is administered, and also of maintaining fairness in the game.

It is a second object of the present invention to provide a network management method for game machines which is capable of uniformly calculating score data transmitted from the game machines participating from a home country and also from other countries when a game using a network is administered, and also of maintaining fairness in the game.

It is a third object of the present invention to provide a program for managing a network of game machines which is capable of uniformly calculating score data transmitted from the game machines participating from a home country and also from other countries when a game using a network is administered, and also of maintaining fairness in the game.

To attain the first object, a network management apparatus according to a first feature of the present invention is connected to a plurality of game machines through a computer network to administratively manage a game in which the plurality of game machines compete, and is characterized by comprising:
a communication function unit establishing a connection to the computer network;
a management function unit controlling the administrative management of a game; and
a management database provided for recording and storing data required to administratively manage the game,
in that the management database stores (i) data representing reference time used for setting a game session for the game in which the plurality of game machines compete, (ii) time-zone data representing time differences between the reference time and standard times of each country or region, and (iii) game session data representing the game session indicated in the reference time, and
in that the management function unit stores a game administration management program having:
a game data collection procedure for collecting, from the game machines connected to the network management apparatus through the computer network, data representing game play results of the game played by players and data representing game-playing times indicated in the standard times of the countries or regions which are the locations of the game machines used by the respective players for playing the game,
a time-indication conversion procedure for converting standard-time indications, representing the game playing times obtained from the data collected by the game data collection procedure, into a reference-time indication on the basis of the time-zone data;
a determination procedure for comparing the game-playing times, indicated in the reference time after the conversion in the time-indication conversion procedure, with the game session represented by the game session data in order to determine whether or not each of the game-playing times is within the game session; and
a game ranking determination procedure for comparing the collection of data representing the play results of the game plays, on which the determination that the game-playing times are within the game session is made by the determination procedure, with one another for determination of game ranking of the players.

The network management apparatus for the game machines according to the first feature is a system for administratively managing a game in which a plurality of players play to compete for score or the like using game machines located in various countries in the world. The plurality of game machines located in various countries in the world and participating in the game are connected to one another through a computer network, and the ranking in the game is determined by the results of the players playing the game with their respective game machines.

Specifically, the network management apparatus launches a game administration management program installed therein, and thereby initially follows the game data collection procedure to collect, from each of the game machines connected through the computer network, data concerning the play result of the player and data concerning the game-playing time indicated in the standard time of the corresponding country or region which is the location of the game machine used in playing.

The network management apparatus subsequently follows the time-indication conversion procedure to convert the standard time indication, representing the game playing time obtained from the collected data, into the reference time indication, used for setting the game session in the network management apparatus, on the basis of time-zone data pre-stored in the management database.

After completion of the conversion to the reference time indication for the game playing time, the network management apparatus follows the determination procedure to make a comparison between the data concerning the game playing time indicated in the reference time and the data concerning the game session set in the network management apparatus for determination whether or not the game playing time is within the game session.

In the above determination, if it is determined that the game play time is in the game session, the network management apparatus follows the game ranking determination procedure to compare the data concerning the play result of each player playing the game in the game session with the data concerning the play results of other players for determination of the game ranking of the players.

As described above, according to the first feature, when the network management apparatus manages the administration of a game at which a plurality of players play to compete for scores or the like with their respective game machines, even if the game machines participating in the game are located at random in countries or regions having time differences, a unified administration of the game session is made practicable with respect to the individual game machines due to the reference time set in the network management apparatus. This makes it possible to prevent, for example, the occurrence of situations in which a player participates in a game and uses the time difference to substantially extend the time period of the game session. This in turn makes it possible to administratively manage a fair game among players.

The network management apparatus for the game machines according to a second feature is characterized, in addition to the constitution of the first feature, in that the standard time of the country of location of the network management apparatus is set as the reference time. The standard time of Japan, for example, is set as the reference time to which a game session in all of the game machines located in various countries is administratively managed in reference.

The network management apparatus for the game machines according to a third feature is characterized, in addition to the constitution of the first feature, in that Greenwich Mean Time is set as the reference time. With reference to Greenwich Mean Time, a game session with respect to all of the game machines located at random in various countries or regions which differ in their standard times is administratively managed on a unified basis.

The network management apparatus for the game machines according to a fourth feature is characterized, in addition to the constitution of the first feature, in that the game administration management program further has a player-ranking data transmission procedure for transmitting data concerning the ranking of the players, determined by the game ranking determination procedure, from the communication function unit through the computer network to each of the game machines.

According to the fourth feature, with the players' ranking data transmitted to each of the game machines from the network management apparatus in accordance with the player-ranking data transmission procedure of the game administration management program, a new game is set in each of the game machines and announced to the players.

The network management apparatus for the game machines according to a fifth feature is characterized, in addition to the constitution of the first feature, in that the management database stores registration data including e-mail addresses of the players, and based on the e-mail address in the registration data on each player, the management function unit transmits, to the players via e-mail, data representing the ranking of the players determined by the game ranking determination procedure of the game administration management program.

According to the fifth feature, announcement about the game ranking to the players is performed by the use of e-mail on the basis of contacts such as e-mail address included in the registration data on each player pre-stored in the management database of the network management apparatus, thereby making it possible to individually and reliably announce the game ranking to each player.

The network management apparatus for the game machines according to a sixth feature is characterized, in addition to the constitution of the first feature, in that the management function unit further stores a game administrative cost management program having:
a game-play record data collection procedure for collecting, from each of the game machines connected via the computer network to the network management apparatus, game-play record data on the game machine including game-playing time, the number of game plays; and
a game-administration-borne cost calculation procedure for calculating an amount of costs borne for administering games with respect to each of the game machines on the basis of the game-play record data on the corresponding game machine collected by the game-play record data collection procedure.

According to the sixth feature, the network management apparatus follows the game-play record data collection procedure of the game administrative cost management program installed in the management function unit to collect game-play record data on the game machine, concerning game-playing time, the number of game plays and the like, from each of the game machines participating in the game. Further the network management apparatus follows the game-administration-borne cost calculation procedure to calculate the amount of costs borne for administering the game in each game machine on the basis of the collected game-play record data from each game machine.

Thus, a smooth game administrative management is achieved.

To attain the second object, a network management method according to a seventh feature of the present invention is for administratively managing a game, in which a plurality of game machines compete, in a network management apparatus connected to the plurality of game machines through a computer network, characterized by the steps of:
storing, in a management database of the network management apparatus, (i) data representing reference time used for setting a game session of a game in which the plurality of game machines compete, (ii) time-zone data representing time differences between the reference time and standard times of each country or region, and (iii) game session data representing the game session indicated in the reference time;
collecting, from the game machines connected to the network management apparatus via the computer network, data representing game play results of the game played by players and data representing game-playing times indicated in the standard times of the countries or regions which are locations of the game machines used by the respective players for playing the game;
converting standard-time indications, representing the game-playing times obtained from the collected data, into a reference-time indication on the basis of the time-zone data;
comparing the game-playing times, indicated in the reference time after the conversion, with the game session represented by the game session data in order to determine whether or not each of the game-playing times is within the game session; and
comparing the collection of data representing the game-play results of the game plays, on which the determination that the game-playing times are within the game session is made, with one another for determination of game ranking of the players.

The network management method for the game machines according to the seventh feature is a method of administratively managing a game in which a plurality of players play to compete for score or the like with their respective game machines located in various countries in the world. The plurality of game machines located in various countries in the world and participating in the game are connected to one another through a computer network, and therefore the ranking in the game is determined by the results of the players playing the game with their respective game machines.

Specifically, in the network management apparatus, initially, data concerning the play results of the respective players, together with data concerning the game-playing times indicated in the standard times of the countries or regions which are the locations of the game machines used in playing, are collected from each of the game machines connected through the computer network.

Then, based on the time-zone data pre-stored in the management database, the standard time indications representing the game-playing times obtained from the collected data are converted into the reference time indication used for setting a game session in the network management apparatus.

After completion of the conversion to the reference time indication for the game-playing times, a comparison between the data concerning the game-playing time indicated in the reference time and the data concerning the game session set in the network management apparatus is made for the determination of whether or not the game-playing time is within the game session.

In the above determination, if it is determined that the game-playing time is within the game session, the data concerning the corresponding play result of the player playing the game in the game session is compared with the data concerning the play results of other players for determination of the game ranking of the players.

As described above, according to the seventh feature, when the network management apparatus manages the administration of a game in which a plurality of players play to compete for scores or the like with their respective game machines, even if the game machines participating in the game are located at random in countries or regions having time differences, a unified administration of the game session is made practicable with respect to the individual game machines due to the reference time set in the network management apparatus. This makes it possible to prevent, for example, the occurrence of situation in which a player participates in a game and uses the time difference to substantially extend the time period of the game session. This in turn makes it possible to administratively manage a fair game among players.

The network management method for the game machines according to an eighth feature is characterized, in addition to the constitution of the seventh feature, in that the standard time of the country of location of the network management apparatus is set as the reference time. The standard time of Japan, for example, is set as the reference time to which a game session in all of the game machines located in various countries is administratively managed with reference.

The network management method for the game machines according to a ninth feature is characterized, in addition to the constitution of the seventh feature, in that Greenwich Mean Time is set as the reference time. With reference to Greenwich Mean Time, a game session with respect to all of the game machines located at random in various countries or regions which differ in their standard times is administratively managed on a unified basis.

The network management method for the game machines according to a tenth feature is characterized, in addition to the constitution of the seventh feature, in that data representing the determined ranking of the players is transmitted through the computer network to each of the game machines. With the players' ranking data transmitted to each of the game machines from the network management apparatus, a new game is set in each of the game machines and announced to the players.

The network management method for the game machines according to an eleventh feature is characterized, in addition to the constitution of the seventh feature, in that registration data including e-mail address of the player is stored in the management database, and based on the e-mail address in the registration data on each player, data representing the determined ranking of the players is transmitted via e-mail to the players. Thus, individual and reliable announcement of the game ranking to each player becomes possible.

The network management method for the game machines according to a twelfth feature is characterized, in addition to the constitution of the seventh feature, by the steps of:
further collecting, from each of the game machines connected via the computer network to the network management apparatus, game-play record data on the game machine including game-playing time and the number of game plays; and
calculating an amount of costs borne for administering games with respect to each of the game machines on the basis of the collected game-play record data on the corresponding game machine.

According to the twelfth feature, the network management apparatus activates the management function unit to collect game-play record data on the game machine, concerning game-playing time, the number of game plays and the like, from each of the game machines participating in the game, and calculates the amount of costs borne for administering the game in each game machine on the basis of the collected game-play record data on the game machines.

Thus, a smooth game administrative management is achieved.

To attain the third object, a network management program for managing a network of game machines according to a thirteenth feature of the present invention is installed in a network management apparatus which is connected to a plurality of game machines through a computer network to administratively manage a game in which the plurality of game machines compete, characterized by comprising:
a game data collection procedure for collecting, from the game machines connected to the network management apparatus through the computer network, data representing game play results of a game played by playersand data representing game-playingtimesindicated in standard times of countries or regions which are locations of the game machines used by the players for playing the game;
a time-indication conversion procedure for converting standard-time indications, representing the game-playing times obtained from the data collected by the game data collection procedure and indicated in the standard times of the countries or regions of the locations of the game machines used for playing the game, into a reference-time indication on the basis of the time-zone data representing time differences between the standard times and a reference time used in setting a game session;
a determination procedure for comparing the game-playing times, indicated in the reference time after the conversion in the time-indication conversion procedure, with the game session represented by the game session data, pre-stored in the reference-time indication in the network management apparatus, in order to determine whether or not each of the game-playing times is within the game session; and
a game ranking determination procedure for comparing the collection of data representing the game-play results of the game plays, on which the determination that the game-playing times are within the game session is made by the determination procedure, with one another for determination of game ranking of the players.

The network management program for managing the network of the game machines according to the thirteenth feature is used by being installed in a network management apparatus for administratively managing a game in which a plurality of players play to compete for score or the like with their respective game machines located in various countries in the world.

Then, first, in accordance with the game data collection procedure, data concerning the play results of the respective players and data concerning game-playing timesindicatedinstandard times of the respective countries or regions which are the locations of the game machines used in playing, are collected from the game machines connected through the computer network.

Then, in accordance with the time-indication conversion procedure, the standard times indication representing the game-playing times obtained from the collected data are converted into the reference time indication, used for setting the game session in the network management apparatus, on the basis of the time-zone data pre-stored in the management database.

After completion of the conversion to the reference time indication for the game-playing time, in accordance with the determination procedure, a comparison between the data representing the game-playing time indicated in the reference time and the data representing the game session set in the network management apparatus is made for determination whether or not the game-playing time is within the game session.

In the above determination, if it is determined that the game-playing time is within the game session, the game ranking determination procedure is launched to make a comparison between the data concerning the play result of each player playing the game in the game session and the data concerning the play results of other players for determination of the game ranking of the players.

As described above, according to the thirteenth feature, in the network management apparatus managing the administration of a game in which a plurality of players play to compete for scores or the like with their respective game machines, even if the game machines participating in the game are located at random in countries or regions having time differences, a unified administration of the game session is made practicable with respect to the individual game machines due to the reference time set in the network management apparatus. This makes it possible to prevent, for example, the occurrence of situation in which a player participates in a game and uses the time difference to substantially extend the time period of the game session. This in turn makes it possible to administratively manage a fair game among players.

The network management program for the game machines according to a fourteenth feature is characterized, in addition to the constitution of the thirteenth feature, in that the standard time of the country of location of the network management apparatus storing the network management program is set as the reference time. The standard time of Japan, for example, is set as the reference time to which a game session in all of the game machines located in various countries is administratively managed in reference.

The network management program for the game machines according to a fifteenth feature is characterized, in addition to the constitution of the thirteenth feature, in that Greenwich Mean Time is set as the reference time. With reference to Greenwich Mean Time, a game session with respect to all of the game machines located at random in various countries or regions which differ in their standard times is administratively managed on a unified basis.

The network management program for the game machines according to a sixteenth feature is characterized, in addition to the constitution of the thirteenth feature, by further comprising a player-ranking data transmission procedure for transmitting data, representing the ranking of the players which is determined by the game ranking determination procedure, through the computer network to each of the game machines.

According to the sixteenth feature, with the players' ranking data transmitted to each of the game machines from the network management apparatus in accordance with the player-ranking data transmission procedure, a new game is set in each of the game machines and announced to the players.

The network management program for the game machines according to a seventeenth feature is characterized, in addition to the constitution of the thirteenth feature, by further comprising a mail transmission procedure for transmitting data, representing the ranking of the players determined by the game ranking determination procedure, via e-mail to each of the players on the basis of e-mail address in registration data on the corresponding player pre-stored in the network management apparatus.

According to the seventeenth feature, with following the mail transmission procedure, announcement about the game ranking to the players is performed by the use of e-mail transmitted on the basis of contacts such as e-mail address included in the player registration data pre-stored in the management database of the network management apparatus, thereby making it possible to individually and reliably announce the game ranking to each player.

The network management program for the game machines according to an eighteenth feature is characterized, in addition to the constitution of the thirteenth feature, by further comprising:
a game-play record data collection procedure for collecting, from each of the game machines connected via the computer network to the network management apparatus, game-play record data on the game machine including game-playing time and the number of game plays; and
a game-administration-borne cost calculation procedure for calculating an amount of costs borne for administering games with respect to each of the game machines on the basis of the game-play record data on the corresponding game machine collected by the game-play record data collection procedure.

According to the eighteenth feature, in the network management apparatus storing the network management program, the track-record data collection procedure in the program is launched to collect the game-play record data, representing game-playing time, the number of game plays and the like, from each of the game machines participating in the game. Further the game-administration-borne cost calculation procedure is launched to calculate the amount of costs borne for administering the game in each game machine on the basis of the collected game-play record data from each game machine.

Thus, a smooth game administrative management is achieved.

These and other obj ects and advantages of the present invention will become obvious to those skilled in the art upon review of the following description, the accompanying drawings and appended claims.

### BRIEF DESCRIPTION OF THE DRAWINGS

Fig. 1 is a block diagram illustrating an embodiment of a network management apparatus according to the present invention.
Fig. 2 is a block diagram of a network system when the network management apparatus in the embodiment is connected to a network of game machines.
Fig. 3 is a diagram illustrating a game-machine management table stored in the network management apparatus of the embodiment.
Fig. 4 is a diagram illustrating a player management table stored in the network management apparatus of the embodiment.
Fig. 5 is a diagram illustrating an administrator management table stored in the network management apparatus of the embodiment.
Fig. 6 is a diagram illustrating a game management table stored in the network management apparatus of the embodiment.
Fig. 7 is a diagram illustrating a time-zone management table stored in the network management apparatus of the embodiment.
Fig. 8 is a flow chart showing the procedure for registration of a game machine in the network management apparatus in the embodiment.
Fig. 9 is a diagram illustrating upload data from the game machine to the network management apparatus in the embodiment.
Fig. 10 is a diagram illustrating download data from the network management apparatus to the game machine in the embodiment.
Fig. 11 is a flow chart showing the procedure of the network management performed for the game machine in a network management apparatus in the embodiment.
Fig. 12 is a table showing scores in the embodiment.
Fig. 13 is a diagram illustrating an example of performance information on the network game in the embodiment.
Fig, 14 is a flow chart showing the procedure for calculating the amount of the game administrative costs to be borne in the network management apparatus in the embodiment.
Fig. 15 is a table of an example of management administration information in the embodiment.

### DETAILED DESCRIPTION OF THE PREFERRED EMBODIMENT

A preferred embodiment according to present invention will be described below in detail with reference to the accompanying drawings.

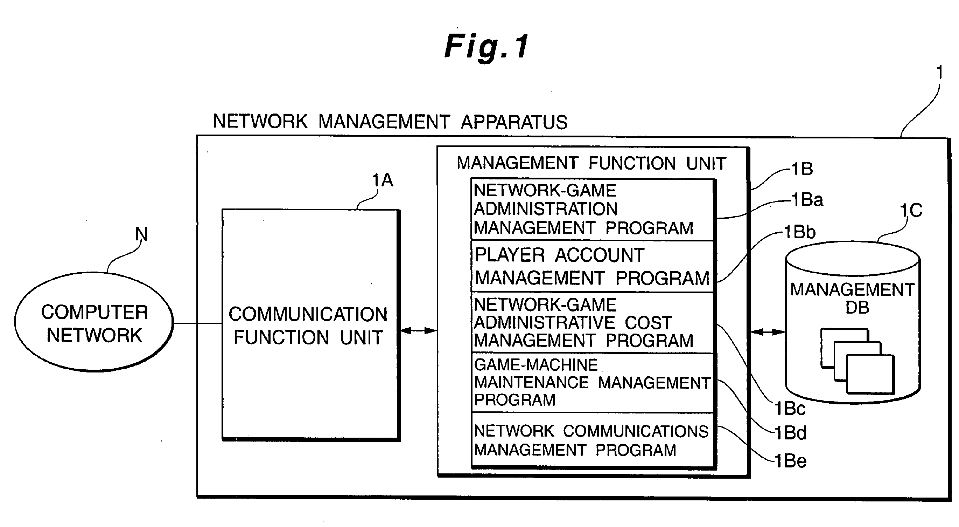

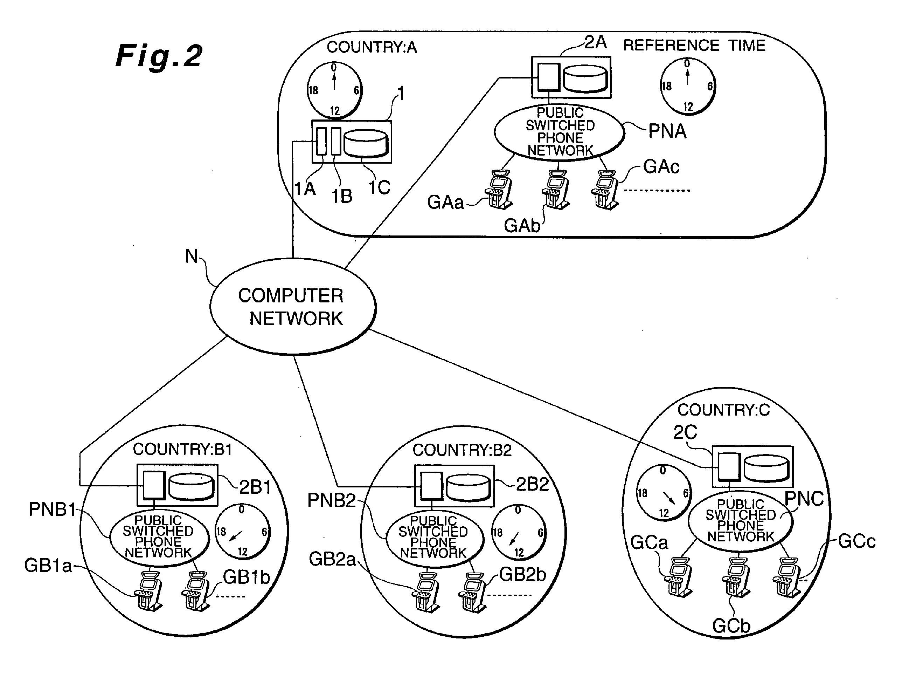

Fig. 1 is a block diagram illustrating an embodiment of a network management apparatus for game machines according to the present invention. Fig. 2 is a network-system block diagram illustrating a state of connecting the network management apparatus to a network of the game machines.

In Figs. 1 and 2, the network management apparatus 1 includes a communication function unit 1A for connection to a computer network N, a management function unit 1B having control over the administrative management of a network game, and a management database 1C for storing various items of data required to manage the network games.

The network game refers here to a game involving a plurality of game machines administered over a network for competition among the game machines, and will be used hereinafter for distinguishing this from a game played with an individual game machine.

The communication function unit 1A of the network management apparatus 1 is connected to the computer network N such as the Internet as described later. The management function unit 1B controls the communications established when various items of data and the like are received/transmitted through the computer network N.

The management function unit 1B stores a network-game administration management program 1Ba for administratively managing the network games, a player account management program 1Bb for managing the accounts of players participating in the network game, a network-game administrative cost management program 1Bc for managing various costs needed for the administration of the network game, a game-machine maintenance management program 1Bd for managing maintenance of the game machines used in the network game over the computer network N, and a network communications management program 1Be for managing a communication path over the network of the game machines.

The network-game administration management program 1Ba of the management function unit 1B provides for execution of: registering and authenticating players participating in a network game; processing time differences among the countries or regions which are locations of the game machines participating in the network game; calculating the results of the network game; deciding the prizewinner(s) of the network game; processing the payment of a prize; and the like.

The network-game administration management program 1Ba provides further for execution of the processing of mail delivery for issuing information regarding a network game session and the results of the network game.

The player account management program 1Bb provides for the execution of managing a player ID of each player participating in a network game, contacts such as his/her address, attribute information regarding the date of his/her birth and the like, account information for payment of a prize, and the like.

The network-game administrative cost management program 1Bc provides for execution of calculating the costs borne for administering the network game, the usage charge of a game machine, the game play charge, and the like, and for billing the participants in a network game and the like.

The game-machine maintenance management program 1Bb provides for execution of managing online maintenance of operational check-ups, failure diagnosis and the like for each game machine on the basis of data representing operating conditions and the operational status of the game machine which is transmitted from each of the game machines through the computer network N.

The network communications management program 1Be provides for execution of monitoring conditions of connection and communication with each of the game machines participating in a network game for management of network communication, e.g. an alternative communication path is secured when a failure of communication with a game machine occurs.

The management database 1C of the network management apparatus 1 is provided for storing various items of data which are required for execution of each of the management programs in the management function unit 1B.

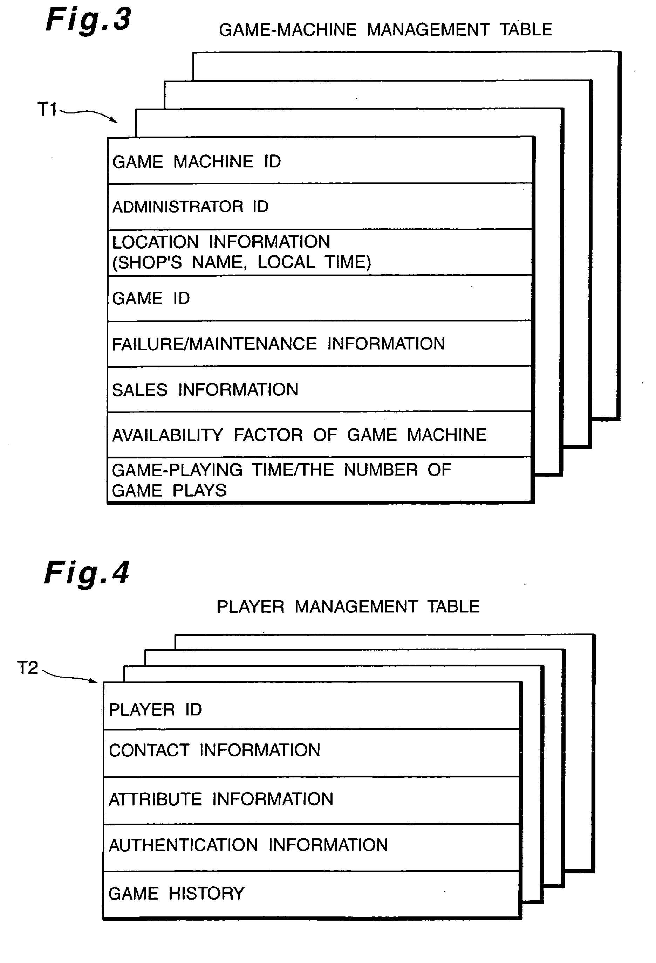

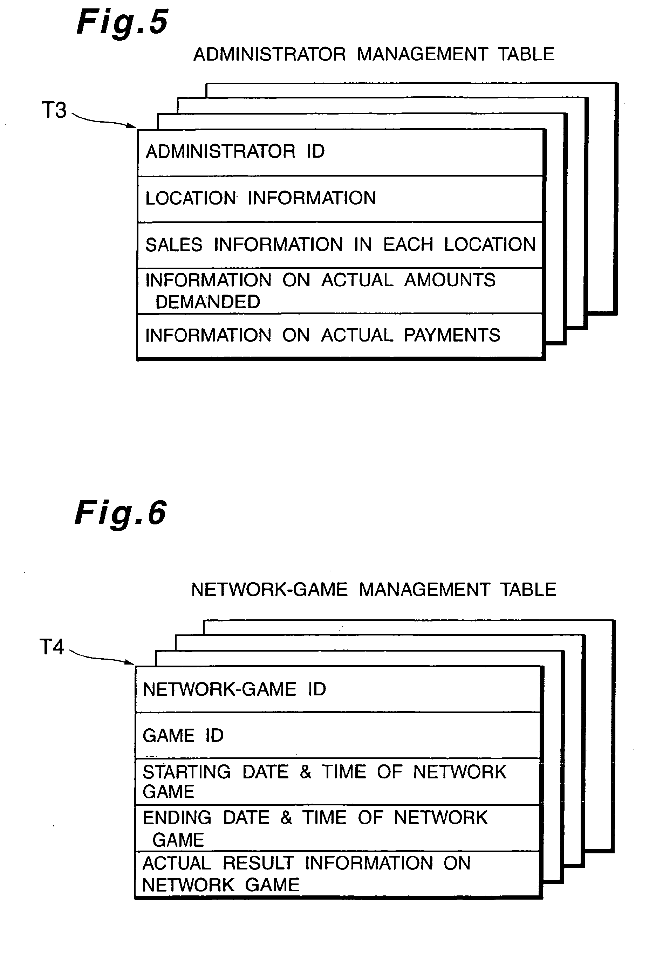

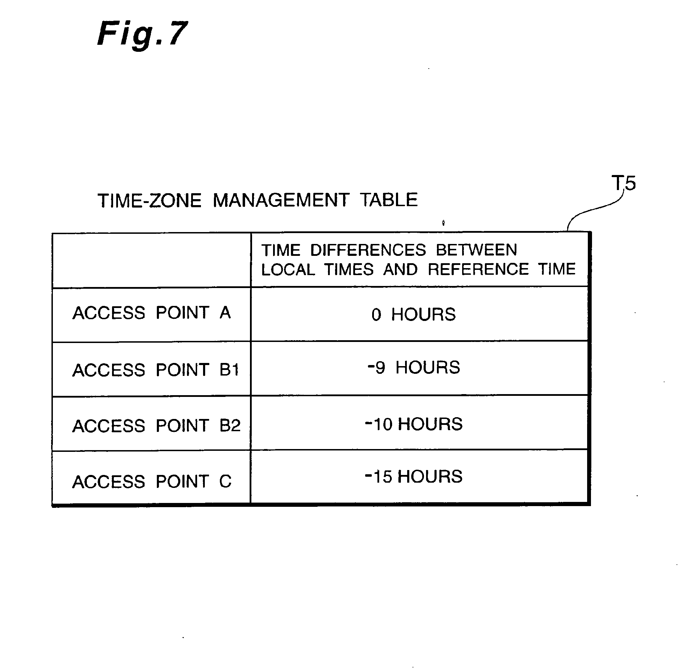

Figs. 3 to 7 are examples of table forms for storing the data in the management database 1C. Fig. 3 shows a game-machine management table T1, Fig. 4 a player management table T2, Fig. 5 an administrator management table T3, Fig. 6 a network-game management table T4, and Fig. 7 a time-zone management table T5.

The administrator refers here to a person directly managing a game machine participating in a network game, e.g. the owner of a game machine or the proprietor of a game arcade.

The game-machine management table T1 as illustrated in Fig. 3 is created for each game machine participating in a network game for a record of: a game-machine ID for making identification of each game machine; an administrator ID of the administrator of the game machine; location information about a country or region, a shop, local time, and the like, in which the game machine is located; a game ID of game software stored; failure/maintenance information regarding a failure history, maintenance history, and the like of the game machine; information about sales of the game machine; information about a availability factor of the game machine; information about a game-playing time and the number of game plays; and the like.

The player management table T2 as shown in Fig. 4 is created for each player participating in a network game for a record of: a player ID for making identification of each player; contact information on the player, e.g. his/her e-mail address, his/her telephone number; attribute information regarding the player, e.g. his/her personal name, the date of his/her birth; authentication information for the player, e. g. the password; and information about the player's past results of participation in the network games, e.g. the player's game history, prizes won, the circumstances regarding the payment of the prizes, and the like.

The administrator management table T3 as shown in Fig. 5 is created for each administrator administering the game machine for a record of: an administrator ID for making identification of each administrator; location information about the location (e.g. a shop's name, address) of the game machine so administered; information about sales of the game machine in each location; information about actual amounts demanded in the past, the issued-billings in the past and the like to cover the costs borne by the administrator in accordance with the sales of the game machine; information about actual payments made in the past to cover the costs borne by the administrator; and the like.

The network-game management table T4 as shown in Fig. 6 is created for each network game session for a record of: a network game ID for making identification of each network game; a game ID of a game played in the network game; a date and time of the starting of the network game; a date and time of the end of the network game; information about the actual results of the network games in terms of the ranking of the participants in the network game, and the like; and the like.

In the time-zone management table T5 as shown in Fig. 7, data on time differences for each country/region which is a location of the game machine is recorded.

Next, a description will be given of the network configuration of the game machines connected to the foregoing network management apparatus 1.

Returning to Fig. 2, the network management apparatus 1 located in a given country A is connected to the computer network N such as the Internet by the communication function unit 1A.

Let us assume that, for convenience, three countries A, B and C are involved in the network as illustrated in Fig. 2. Game machines GAa, GAb, Gac, etc., are located in country A, game machines GB1a, GB1b, etc., and game machines GB2a, GB2b, etc. , are located in country B, game machines GCa, GCb, GCc, etc., are located in country C. The above game machines GAa to GCc and others are connected, via the corresponding public networks (e.g. public switched phone network) PNA, PNB1, PNB2, PNC instituted in the corresponding countries, to the associated access point servers 2A, 2B1, 2B2, 2C assigned to the corresponding countries. Then the game machines are connected via the corresponding access point servers 2A, 2B1, 2B2, 2C to the computer network N.

Here, the country B is assumed to be a country having different domestic standard times, such as Eastern time and Pacific time in U.S.A. Therefore, access point servers 2B1 and 2B2 are provided in the respective regions differing in their standard times.

Next, a description will be given of the procedure for administering a network game by the network management apparatus 1.

The network management apparatus 1 accepts registrations of the game machines GAa, GAb, Gac, etc., GB1a, GB1b, etc., GB2a, GB2b, etc., GCa, GCb, GCc, etc., which participate in a network game administered by the network management apparatus 1.

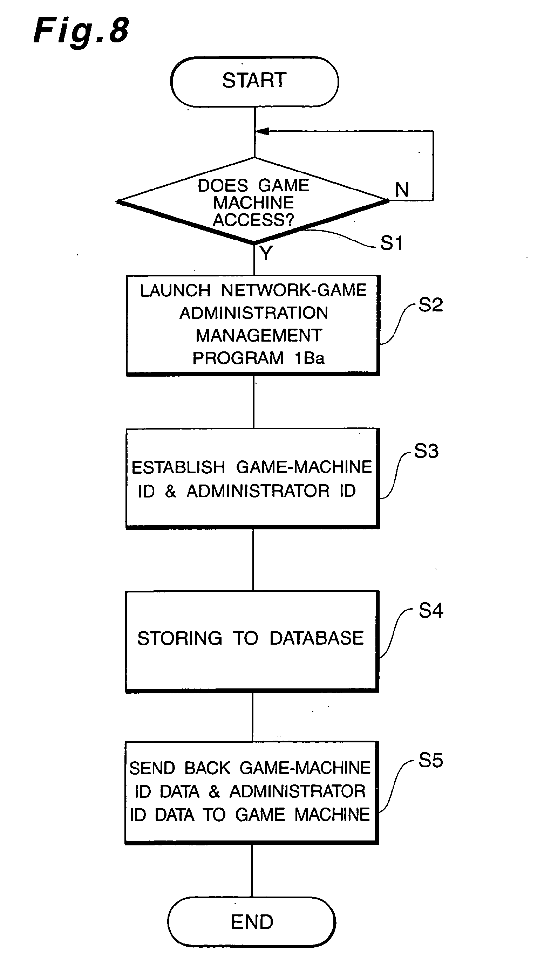

Fig. 8 is a flow chart showing the procedure for register of the game machine in the network management apparatus 1.

In Fig. 8, upon input of an access signal from a game machine to the communication function unit 1A via the computer network N (step S1), the network management apparatus 1 launches the network-game administration management program 1Ba in the management function unit 1B (step S2).

Under the network-game administration management program 1Ba the network management apparatus 1 establishes an ID of the game machine having access thereto and an ID of the administrator of the game machine concerned (step S3), and then records the established game-machine ID and administrator ID in the management database 1C, together with the location information transmitted from the game machine and the game ID used in the network game (step S4).

At this point, in the management database 1C of the network management apparatus 1, a game-machine management table T1 as described in Fig 3 is created for each game machine and the game machine ID, the administrator ID, the location information and the game ID are stored in the game-machine management table T1.

After that, the network management apparatus 1 sends back data representing the game-machine ID, the administrator ID and the game ID, which are recorded in the management database 1C, to the game machine during the process of access for registration (step S5).

Each of the game machines stores the game machine ID, the administrator ID and the game ID based on the data transmitted from the network management apparatus 1.

In this manner, each of the game machines after completion of the registration with the network management apparatus 1 transmits upload data to the network management apparatus 1 as described later. Upon reception of the upload data transmitted from the game machine, the network management apparatus 1 in turn transmits download data to the game machine.

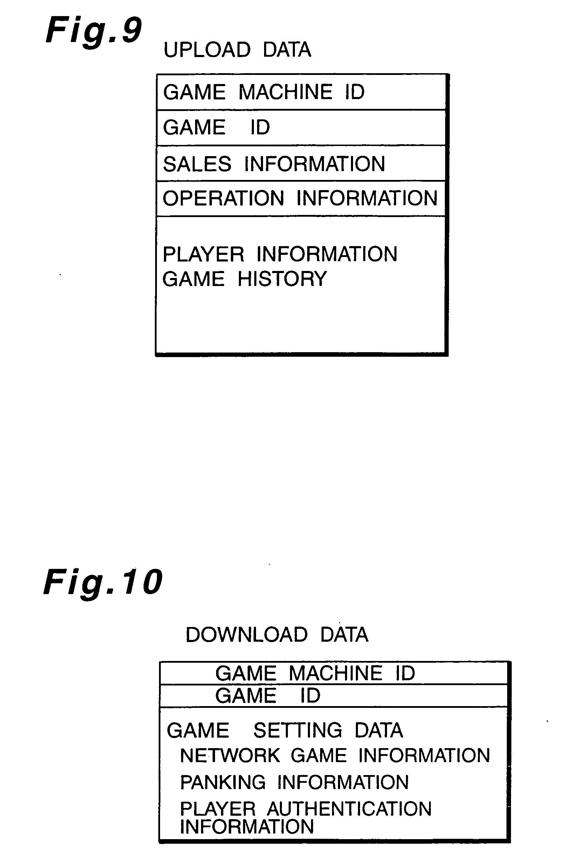

Fig. 9 is a schematic diagram illustrating an outline of the upload data from the game machine. The upload data includes data about the game-machine ID, game ID, sales information, game-machine operating information, player information, game history of each player, and the like.

Fig. 10 is a schematic diagram for illustrating the outline of the download data from the network management apparatus 1. The download data includes the game-machine ID, the game ID, and game setting data including network-game information, ranking information and player authentication information, which are read out from the game-machine management table T1, player management table T2, and network-game management table T4 of the management database 1C.

Next, a description will be given the procedure for managing the administration of the network game in the network management apparatus 1, but prior to that, the typical operation of each of the game machines participating in the network game should be described.

In each of the game machines GAa to GCc, etc. , a game environment setting, player authentication, and the like are performed on the basis of game setting data downloaded from the network management apparatus 1.

The game environment setting includes the process of displaying on the display screen the main points for the network game session, i.e. the date and time of the beginning and the end of the network game, a network game ID of the network game to be held, a game ID of the game used in the network game, and the like, a process of allowing an interim report on the network game, such as ranking information, to reflect the game play, and the like.

The player authentication includes a process of first-time registration of a player playing a game used in the network game, a process of giving an already-registered player permission to continue playing the game, and the like.

The first-time registration of a player is made by inputting the attribute information about the player's name, address and the like into the game machine. The game machine stores the input attribute information regarding the player, and transmits it together with the aforementioned upload data to the network management apparatus 1.

The authorization of an already-registered player is made by entering the player ID and the password or using an IC card issued to the player.

In each of the game machines GAa to GCc, etc., when the game is played by the players authenticated and having their respective player IDs, data representing his/her history in the game concerned is stored for each player.

The game history includes time data representing a game-play date and a starting time and ending time of the game play which are recorded in reference to the standard time of the country or region of each location of the game machines used in the game (hereinafter referred to as "local time"), as well as the player ID, network-game ID, game ID, scores, and the like.

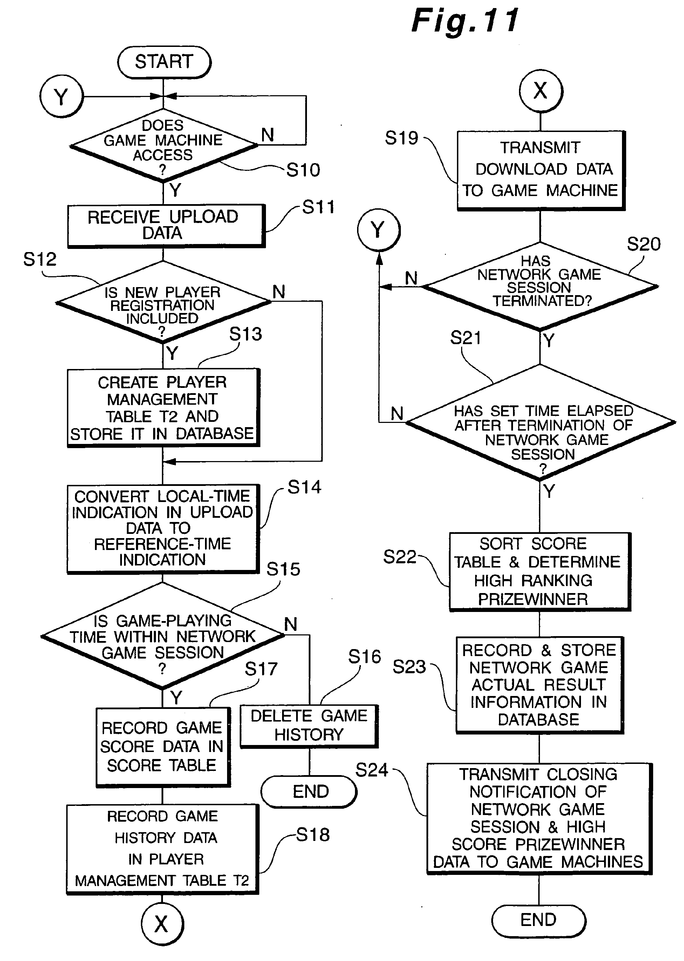

Fig. 11 is a flow chart showing the procedure for managing the administration performed by the network management apparatus 1 during the game-in-network-game session.

Next, a description with reference to Fig. 11 will be given of the procedure for managing the administration performed on the network game by the network management apparatus 1.

The game machines GAa, GAb, GAc, etc., GB1a, GB1b, etc., BG2a, GB2b, etc., GCa, GCb, GCc, etc., are connected individually at regular intervals (e.g. at the time of turning on the power once a day) or at a selected time, to the network management apparatus 1 via the associated access point servers 2A, 2B1, 2B2, 2C which manage the respective counties or regions, for transmission of the aforementioned upload data.

In Fig. 11, the network management apparatus 1 executes the network communication management program 1Be in the management function unit 1B to monitor the occurrence of access by a game machine at all times (step S10) . Then upon sensing access by any game machine, the network management apparatus 1 launches the network-game administration management program 1Ba for reception of upload data transmission from the game machine (step S11).

Then, the network management apparatus 1 determines whether or not the upload data from the game machine includes registration data about the first-time registration of a player (step S12). If it includes a first-time registration, the player account management program 1Bb is launched to create a new player management table T2 recording a player ID, contacts such as address, and attribute information of the newly registered player, and the resulting player management table T2 is stored in the management database 1C (step S13).

The network management apparatus 1 executes the network-game administration management program 1Ba to convert the local time indicating a date and time of the beginning and ending of the game play which are items of the time data included in the game history data for each player included in the upload data, to reference time preset in the network management apparatus 1 for display (step S14) .

As the reference time, for example, the standard time of the country in which the network management apparatus 1 is located (country A which is Japan in the embodiment), or GMT (Greenwich Mean Time) is set.

The conversion fromdisplay at the local time in the game history data to display at the reference time is performed based on the time-zone management table T5 stored in the management database 1C.

Specifically, based on the game-machine ID included in the upload data from the game machine, the management function unit 1B of the network management apparatus 1 reads out the location information regarding the game machine concerned from the game-machine management table T1 stored in the management database 1C. Then, based on the location information so read, the management function unit 1B reads out time-zone data on the time differences from the reference time from the time-zone management table T5, and then uses the time-zone data to convert from the local time to the reference time for display of the date and time of the starting and ending of the game play.

For example, regarding the upload data transmitted from the game machine GCa, the time difference between the reference time and the standard time of the country C (see Fig. 2) in which the game machine GCa is located is 15 hours behind as shown in the time-zone management table T5 in Fig. 7. With the above conversion, the time data representing the date and time of the start and end of the game play in the game history data of the player is converted to data indicating a time 15 hours ahead of the local time (the reference time).

The clocks shown in Fig. 2 respectively indicate local times (standard times) of the countries/regions A, B1, B2, C, but in the country A (Japan) another clock is additionally shown and indicates the reference time synchronized with the standard time of the country A.

Then, the network management apparatus 1 reads the network-game management table T4 in the management database 1C on the basis of the network-game ID included in the upload data transmitted from the game machine, in order to determine whether or not the date and time of the starting and ending of the game play (the game play time-period) in the game history data on the player as expressed in terms of the reference time are within the corresponding network game session (step S15).

In step S15, if the play time-period of the game played by the player is outside the corresponding network game session, the associated game history data is deleted (step S16).

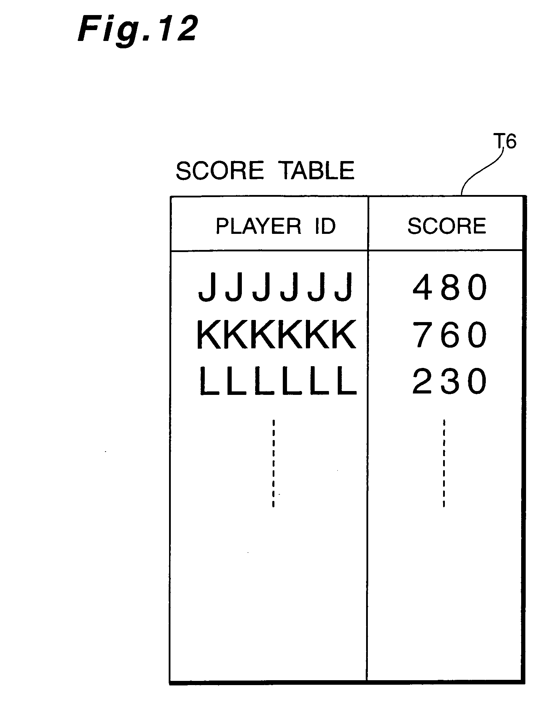

In step S15, if the play time-period of the game played by the player is within the corresponding network game session, then the score data of the game included in the game history data, together with the player ID, is recorded in the score table T6 created for each network game in the management database 1C as shown in Fig. 12 (step S17).

When recording the score data in the score table T6 in step S17, if the score table T6 has no record of the score data of the player concerned, a new column is formed to enter the player's score in this game as it is. However, if the score table T6 already has a record of the player's score, the network management apparatus 1 performs a comparison between the already-registered score data and the score data newly transmitted, and then if the score of the new score data is higher than the already-registered score, the network management apparatus 1 writes over the already-registered score to update the record of the score data.

Then, based on the player ID included in the game history data, the network management apparatus 1 records and stores the game history data in the corresponding player management table T2 in the management database 1C (step S18).

After completion of step S18, based on the collection of the data updated as described above, the network management apparatus 1 transmits the download data as described in Fig. 10 to the game machine which transmitted the upload data thereto (step S19).

The download data transmitted includes the updated game setting data. Therefore, the game machine receiving this download data sets new game environment based on the game setting data to display the latest ranking of the players participating in the network game and update authorization information regarding the player.

Transmission/reception of the upload data and the download data between the network management apparatus 1 and the game machine as described hitherto is performed during the period of a network game session.

For this duration, the network management apparatus 1 determines at all times whether the network game session has terminated or not (step S20).

Subsequent to the termination of the network game session, the network management apparatus 1 determines whether or not any preset time has elapsed after the close of the network game session (step S21) .

The determination in step S21 is made to provide for the event that when the network management apparatus 1 determine the termination of a network game session on the basis of the set reference time, score data of the game played during the network game session may still not have been transmitted from a game machine to the network management apparatus 1. The set time for making the above determination is set in accordance with the longest time interval from access to access among the game machines participating in the network game, for example.

In step S21, when it is determined that the set time has elapsed after the close of the network game session, then the collection of score data from all the players recorded in the score table T6 is sorted for deciding the high ranking prizewinner(s) (step S22) .

Then, the network management apparatus 1 records and stores information on actual results such as the high ranking prizewinner (s) in the network game, and the like in the network-game management table T4 (see Fig. 6) of the management database C1 (step S23).

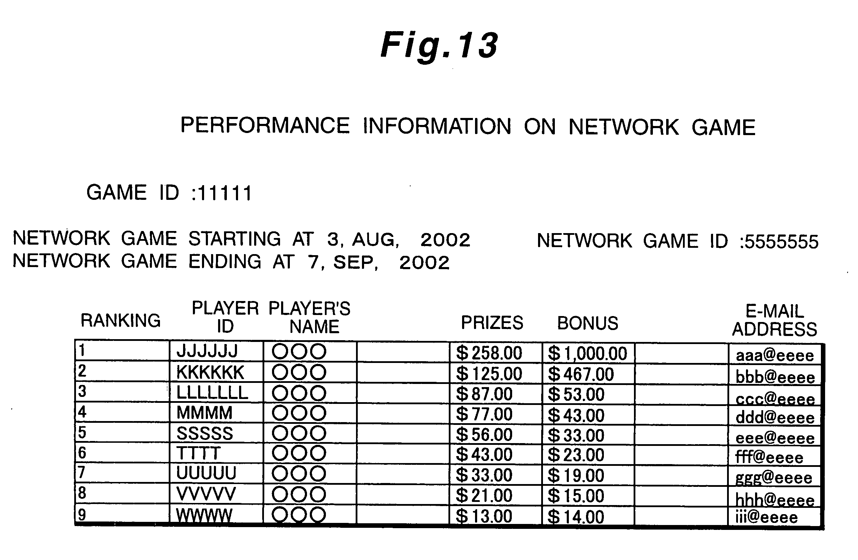

Fig. 13 illustrates an example of performance information on the network game recorded in the network-game management table T4 of the management database 1C after sorting and calculating in the network management apparatus 1 at step S23.

The information on actual results of a network game as shown in Fig. 13 includes the game ID, the network-game ID, the date and time of the starting and ending of the network game, and the network-game ranking, and also information about the player ID, the player's name, the prizes, the bonus amounts, e-mail address, and the like of each of the high scoring players is tabulated in ranking order.

Then, the network management apparatus 1 transmits notification of the close of the network game session and data about the high-ranking winners and the like to the game machines (step S24), and finally terminates the procedure of managing and administering the network game concerned.

The announcement of the high-ranking winners and the prizes in the game-in-network-game may be performed by any method of publishing them in a game journal, or of sending e-mails from the communication function unit 1A of the network management apparatus 1 to the winning players, for example.

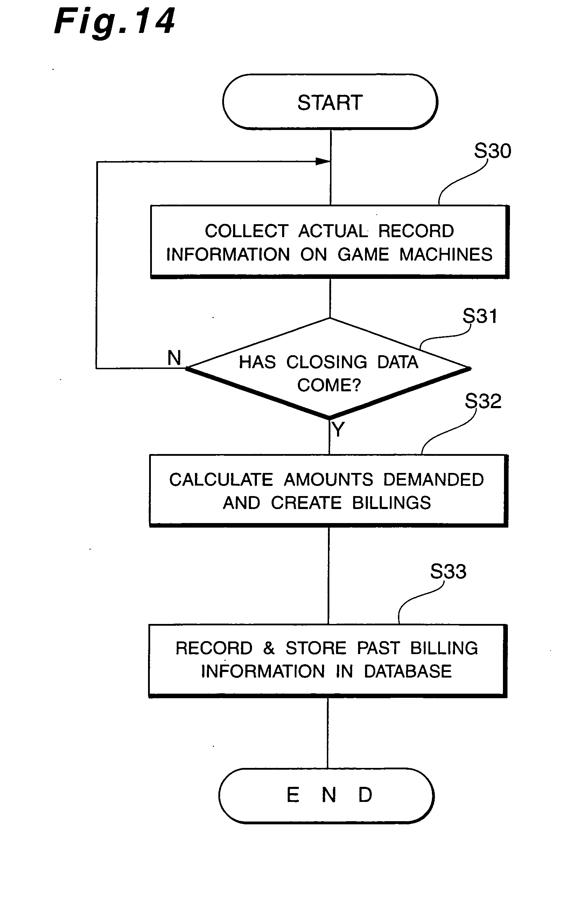

Fig. 14 is a flow chart showing the procedure for processing the management of the costs borne by the administrators in the network management apparatus 1.

In Fig. 14, the network management apparatus 1 executes the network-game administrative cost management program 1Bc of the management function unit 1B in order to collect the failure/maintenance information of each of the game machines GAa, GAb, GAc, etc., GB1a, GB1b, etc., GB2a, GB2b, etc., GCa, GCb, GCc, etc. , and also the actual record information on the individual game machines about sales performance, the availability factor, game-playing time, the number of game plays and the like. Then, the network management apparatus 1 records them in the game-machine management table T1 (see Fig. 3) of the management database 1C for every occurrence of access from each of the above game machines to the network management apparatus 1 via the associated access point servers 2A, 2B1, 2B2, 2C (step S30).

Then, the network management apparatus 1 determines whether a preset closing date for billing has come or not (step S31).

The closing date for billing is set as a predetermined date every month, for example.

In step S31, if it is determined that the billing closing date comes, the network management apparatus 1 calculates the amount of the network-game costs borne by each administrator of games machine for the purposes of billing (step S32).

For the calculation of the amount of the network-game costs borne by the administrators to be billed, first, based on the records in the game-machine management table T1 stored in the management database 1C, the amount to be billed is calculated for each game machine, and then the calculated amounts to be billed for each machine are totaled for each administrator.

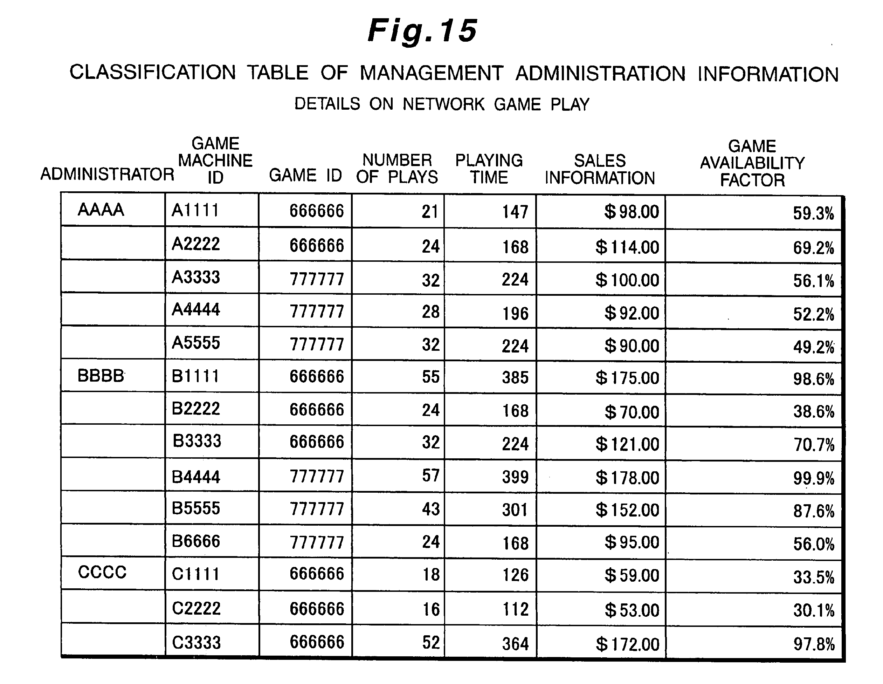

Fig. 15 is a classification table used for classifying the data for calculation of the amount to be billed to each administrator for each game machine by reading out it from the game-machine management table T1 when the amounts of the network-game costs borne by the administrators are to be calculated for billing.

The bills for the costs to be borne created in step S32 are sent to the respective administrators by separate mail or the like.

Subsequent to step S32, the network management apparatus 1 records and stores the past billing information about the calculated amounts of the network-game costs borne by the administrators and the like in the corresponding administrator management table T3 (see Fig. 5) in the management database 1C (step S33).

Further, the actual payment of the bills for the network-game costs borne by each administrator is also recorded and stored in the corresponding administrator management table T3.

In the above embodiment, the amount of network-game costs to be billed is calculated on the basis of the currency set in the network management apparatus regardless of the countries/regions of the locations of the game machines. However, the network management apparatus may have a currency-exchange-rate conversion program installed for converting the network-game-borne costs into the currency used in the country/region of the location of each game machine, so that the network-game-borne costs may be billed in the currency used in the country/region of the location of the game machine, leading to smooth payment of the network-game-borne costs.

In this case, the currency exchange rates may be set by the administrator of a network game as required, or may be set in real time by obtaining the foreign exchange rate data from the Internet.

The terms and description used herein are set forth by way of illustration only and are not meant as limitations. Those skilled in the art will recognize that numerous variations are possible within the spirit and scope of the invention as defined in the following claims.

## Claims

1. A network management apparatus (1) connected to a plurality of game machines through a computer network to administratively manage a game in which the plurality of game machines compete, **characterised by** comprising:
a communication function unit (1A) for establishing a connection to the computer network (N);
a management function unit (1B) for controlling administrative management of a game; and
a management database (1C) provided for recording and storing data required to administratively manage the game, and
in that the management database (1C) stores: data representing reference time used for setting a game session for the game in which the plurality of game machines (G) compete; time-zone data (T5) representing time differences between the reference time and standard times of each country or region; and game session data (T4) representing the game session indicated in the reference time, and
in that the management function unit (1B) stores a game administration management program (1Ba) having,
a game data collection procedure for collecting, from the game machines (G) connected to the network management apparatus (1) through the computer network (N), data representing game play results of the game played by players and data representing game-playing times indicated in the standard times of the countries or regions which are the locations of the game machines (G) used by the respective players for playing the game,
a time-indication conversion procedure for converting standard-time indications, representing the game-playing time obtained from the data collected by the game data collection procedure, into a reference-time indication on the basis of the time-zone data,
a determination procedure for comparing the game-playing time, indicated in the reference time after the conversion in the time-indication conversion procedure, with the game session represented by the game session data in order to determine whether or not each of the game-playing times is within the game session, and
a game ranking determination procedure for comparing the collection of data representing the play results of the game plays, on which the determination that the game-playing times are within the game session is made in the determination procedure, with one another for determination of game ranking of the players.

2. The network management apparatus for the game machines according to claim 1, **characterised in that** the standard time of the country of location of the network management apparatus (1) is set as the reference time.

3. The network management apparatus for the game machines according to claim 1, **characterised in that** Greenwich Mean Time is set as the reference time.

4. The network management apparatus for the game machines according to claim 1, **characterised in that** the game administration management program (1Ba) further has a player-ranking data transmission procedure for transmitting data concerning the ranking of the players, determined by the game ranking determination procedure, from the communication function unit (1A) through the computer network (N) to each of the game machines (G).

5. The network management apparatus for the game machines according to claim 1, **characterised in that** the management database (1C) stores registration data (T2) including e-mail addresses of the players, and based on the e-mail address in the registration data (T2) of each player, the management function unit (1B) transmits, to the players via e-mail, data representing the ranking of the players determined by the game ranking determination procedure of the game administration management program (1Ba).

6. The network management apparatus for the game machines according to claim 1, **characterised in that** the management function unit (1B) further stores a game administrative cost management program (1Bc) having:
a game-play record data collection procedure for collecting, from each of the game machines (G) connected via the computer network (N) to the network management apparatus, game-play record data on the game machine including game-play time, the number of game plays; and
a game-administration-borne cost calculation procedure for calculating an amount of costs borne for administering games with respect to each of the game machines (G) on the basis of the game-play record data on the game machine (G) collected by the game-play record data collection procedure.

7. A network management method for game machines to administratively manage a game, in which a plurality of game machines compete, in a network management apparatus connected to the plurality of game machines through a computer network, **characterised by** the steps of:
storing, in a management database (1C) of the network management apparatus (1), data representing reference time used for setting a game session of a game in which the plurality of game machines (G) complete, time-zone data (T5) representing time differences between the reference time and standard times of each country or region, and game session data (T4) representing the game session indicated in the reference time;
collecting, from the game machines (G) connected to the network management apparatus (1) via the computer network (N), data representing game play results of the game played by players and data representing game-playing times indicated in the standard times of the countries or regions which are locations of the game machines used by the respective players for playing the game;
converting standard-time indication, representing the game-playing times obtained from the collected data, into reference-time indication on the basis of the time-zone data;
comparing the game-playing times, indicated in the reference time after the conversion, with the game session represented by the game session data in order to determine whether or not each of the game-playing times is within the game session; and
comparing the collection of data representing the game-play results of the game plays, on which the determination that the game-playing times are within the game session is made, with one another for determination of game ranking of the players.

8. The network management method for the game machines according to claim 7, **characterised in that** the standard time of the country of location of the network management apparatus (1) is set as the reference time.

9. The network management method for the game machines according to claim 7, **characterised in that** Greenwich Mean Time is set as the reference time.

10. The network management method for the game machines according to claim 7, **characterised in that** data representing the determined ranking of the players is transmitted through the computer network (N) to each of the game machines (G).

11. The network management method for the game machines according to claim 7, **characterised in that** registration data (T2) including e-mail address of the player is stored in the management database (1C) , and based on the e-mail address in the registration data (T2) of each player, data representing the determined ranking of the players is transmitted via e-mail to the players.

12. The network management method for the game machines according to claim 7, **characterised by** the steps of:
further collecting, from each of the game machines (G) connected via the computer network (N) to the network management apparatus (1) , game-play record data on the game machine including game-playing time and the number of game plays; and
calculating an amount of costs borne for administering games with respect to each of the game machines (G) on the basis of the collected game-play record data on the corresponding game machine (G) .

13. A program for managing a network of game machines which is installed in a network management apparatus (1) connected to a plurality of game machines (G) through a computer network (N) to administratively manage a game in which the plurality of game machines (G) compete, **characterised by**:
a game data collection procedure for collecting, from the game machines (G) connected to the network management apparatus (1) through the computer network (N), data representing game play results of a game played by players and data representing game-playing time indicated in standard times of countries or regions which are locations of the game machines (G) used by the players for playing the game;
a time-indication conversion procedure for converting standard-time indications, representing the game-playing times obtained from the data collected by the game data collection procedure and indicated in the standard times of the countries or regions of the locations of the game machines used for playing the game, into a reference-time indication on the basis of the time-zone data representing time differences between the standard times and a reference time used in setting a game session;
a determination procedure for comparing the game-playing time, indicated in the reference time after the conversion in the time-indication conversion procedure, with the game session represented by the game session data, pre-stored in the reference-time indication in the network management apparatus, in order to determine whether or not the game-playing times are within the game session; and
a game ranking determination procedure for comparing the collection of data representing the game-play results of the game plays, on which the determination that the game-playing times are within the game session is made by the determination procedure, with one another for determination of game ranking of the players.

14. The program for managing the network of the game machines according to claim 13, **characterised in that** the standard time of the country of location of the network management apparatus (1) is set as the reference time.

15. The program for managing the network of the game machines according to claim 13, **characterised in that** Greenwich Mean Time is set as the reference time.

16. The program for managing the network of the game machines according to claim 13, **characterised by** further comprising a player-ranking data transmission procedure for transmitting data, representing the ranking of the players which is determined by the game ranking determination procedure, through the computer network (N) to each of the game machines (G).

17. The program for managing the network of the game machines according to claim 13, **characterised by** further comprising a mail transmission procedure for transmitting data, representing the ranking of the players determined by the game ranking determination procedure, via e-mail to the players on the basis of e-mail address in registration data (T2) on the corresponding player pre-stored in the network management apparatus (1).

18. The program for managing the network of the game machines according to claim 13, **characterised by** further comprising:
a game-play record data collection procedure for collecting, from each of the game machines (G) connected via the computer network (N) to the network management apparatus (1), game-play record data on the game machine including game-playing time and the number of game plays; and
a game-administration-borne cost calculation procedure for calculating an amount of costs borne for administering games with respect to each of the game machines (G) on the basis of the game-play record data on the corresponding game machine (G) collected by the game-play record data collection procedure.
